# EUROPEAN PATENT SPECIFICATION

(11) **EP 3 722 075 B1**
(45) Date of publication and mention of the grant of the patent: **29.06.2022**
(21) Application number: 19167790.5
(22) Date of filing: 08.04.2019
(51) Int. Cl.: B29C 64/153, B33Y 30/00, B33Y 10/00, B29C 64/277, B29C 64/268, B22F 3/105, B22F 10/20, B22F 12/00

(54) **THREE-DIMENSIONAL PRINTING SYSTEM OPTIMIZING SEAMS BETWEEN ZONES FOR MULTIPLE ENERGY BEAMS**
SYSTEM ZUM DREIDIMENSIONALEN DRUCKEN ZUR OPTIMIERUNG VON NÄHTEN ZWISCHEN ZONEN FÜR MEHRERE ENERGIESTRAHLEN
SYSTÈME D'IMPRESSION TRIDIMENSIONNELLE D'OPTIMISATION DE COUTURES ENTRE DES ZONES POUR DE MULTIPLES FAISCEAUX D'ÉNERGIE

(43) Date of publication of application: 14.10.2020
(73) Proprietor: LayerWise N.V., 3001 Heverlee (BE)
(72) Inventor: Plas, Jan, 3012 Wilsele (BE); Ray, Nachiketa, 3000 Leuven (BE)
(74) Representative: dompatent von Kreisler Selting Werner - Partnerschaft von Patent- und Rechtsanwälten mbB

(56) References cited:
- EP-A1- 2 999 561
- EP-A1- 3 415 254
- CN-A- 108 016 034
- US-A1- 2017 173 737

## Description

### Field of the Invention

The present disclosure concerns an apparatus and method for the fabrication of three dimensional (3D) articles utilizing powder materials. More particularly, the present disclosure concerns a manufacturing strategy that improves internal structural integrity of the articles when multiple energy beams are used.

### Background

Three dimensional (3D) printing systems are in rapidly increasing use for purposes such as prototyping and manufacturing. One type of three dimensional printer utilizes a layer-by-layer process to form a three dimensional article of manufacture from powdered materials. Each layer of powdered material is selectively fused using an energy beam such as a laser, electron, or particle beam. Higher productivity printers can utilize multiple energy beams. One challenge with multiple energy beams is a transition from using one energy beam to another.

WO 2014/187606 A1 and the family application EP 2 999 561 A1 disclose a method for forming a three-dimensional article through successive fusion of parts of a powder bed, which parts correspond to successive cross sections of the three-dimensional article, said method comprising the steps of:
providing a model of said three dimensional article;
applying a first powder layer on a work table;
directing a first energy beam from a first energy beam source over said work
table, said directing of said first energy beam causing said first powder layer to fuse in first selected locations according to said model, so as to form a first part of the first cross section of said three-dimensional article; and directing a second energy beam from a second energy beam source over said work table, said directing of said second energy beam causing said first powder layer to fuse in second selected locations according to said model, so as to form a second part of the first cross section of said three-dimensional article,
wherein said first and second locations of said first powder layer are at least partially overlapping each other in a first overlapping zone.

US 2017/0173737 A1 discloses a method of additive manufacturing for building a three-dimensional part in a part bed, the method comprising:
providing a first scanner having a first field of view;
providing a second adjacent scanner having a second field of view wherein the first field of view and the second field of view at least partially overlap and
wherein the first and second scanners are positioned at a selected height above the substrate;
applying a layer of one or more materials onto or over the part bed;
providing a plurality of laser sources configured to produce a plurality of laser beams;
directing a first laser beam of the plurality of laser beams to the first scanner and a second laser beam of the plurality of laser beams to the second scanner;
directing a movement of the laser beam from each corresponding scanner to selectively fuse the materials based on a sliced layer of a digital model for the three-dimensional part to produce a layer of the three-dimensional part by selectively directing laser energy to the materials in a selected pattern; and synchronizing the movement of the laser beams to continuously process the selected pattern in each layer of the three-dimensional part.

CN 108016034 A discloses a photo-curable laser scanning system comprising a powder bed; a plurality of laser modules, each laser module generates a laser beam, the laser beam is used to cure the powder material located on the powder bed, and each laser beam has a corresponding scanning area in each powder layer;
a laser scanner which is used to separately guide each laser beam to cure a corresponding scanning area along a straight scanning path wherein different laser beams form an overlapping area between adjacent scanning areas and wherein the same powder layer, the laser beam generated by the same laser module has at least two scanning paths of different lengths, and/or in adjacent powder layers, the length of at least one up and down corresponding scanning path is different.

### Brief Description of the Figures

FIG. 1 is a schematic diagram of a three-dimensional printing system for fabricating a three-dimensional article.
FIG. 2 is a diagram illustrating a single layer of powder that has been selectively fused.
FIG. 3A is an illustration of a first layer of powder dispensed by a powder dispenser.
FIG. 3B is an illustration of a first layer of powder that has been selectively fused by two different energy beams.
FIG. 3C is an illustration of a second layer of powder that has been dispensed over a selectively fused first layer.
FIG. 3D is an illustration of a two layers of powder that have been selectively fused by two different energy beams.

FIG. 4 is an illustration of a sequence of powder layers that have been selectively fused. The layers have been individually fused with a first energy beam fusing a first area, a second energy beam fusing a second area, and a seam along which the first and second areas overlap. The seams are laterally offset from layer to layer with a minimum offset distance u and a lateral span of v. In the illustrated embodiment, there are five layers in a sequence.

FIG. 5 is an illustration of a sequence of powder layers that have been selectively fused. The layers have been individually fused with a first energy beam fusing a first area, a second energy beam fusing a second area, and a seam along which the first and second areas overlap. The seams are laterally offset from layer to layer with a minimum offset distance u and a lateral span of v. In the illustrated embodiment, there are two sequences of five layers each.

FIG. 6 is a diagram illustrating a lateral overlay view of a sequence of five fused layers.

FIG. 7 is a diagram of a selectively fused layer of powder in which two different energy beams are used to form inner contours.

### Summary

The invention is set out in the appended set of claims.

Claim 1 defines the apparatus according to the invention.

In one implementation the plurality of beams includes a third beam. The controller is configured to operate the third beam to define at least part of a contour around the composite hatch area.

In another implementation the plurality of beams includes a third beam. The plurality of beams define a plurality of contours around the composite hatch area including an outer contour and an inner contour. The outer contour is formed by the third beam and the inner contour is formed by a combination of the first beam and the second beam. The outer contour can include a plurality of offset contours. The inner contour can include a plurality of offset contours.

In yet another implementation the transverse overlap distance (x) can be at least equal to twice the alignment uncertainty, at least equal to three times the alignment uncertainty, or up to four times the alignment uncertainty.

In further implementations, r is at least 4, at least 5, or greater than 5. The transverse seam location can be varied randomly from layer to layer.

In a yet further implementation, the powder is a metal powder. The layers can be any practical thickness but a typical layer thickness is less than about 200 micrometers or less than about 150 micrometres. More particularly, a layer thickness can be in a range of 10 to 100 micrometres. Yet more particularly, a layer thickness can be in a range of 20 to 50 micrometres. The metal powder can be a pure metal such as titanium or an alloy. Alloys can be based upon aluminum, nickel, titanium, cobalt, iron, copper, and other metals. Some metal powders can be powder mixtures.

In another embodiment, v is at least three times u. In other embodiments, v is at least four times u, or at least five times u.

Claim 7 defines the method according to the invention and claim 11 defines the computer-readable storage apparatus according to the invention.

### Detailed Description of the Preferred Embodiments

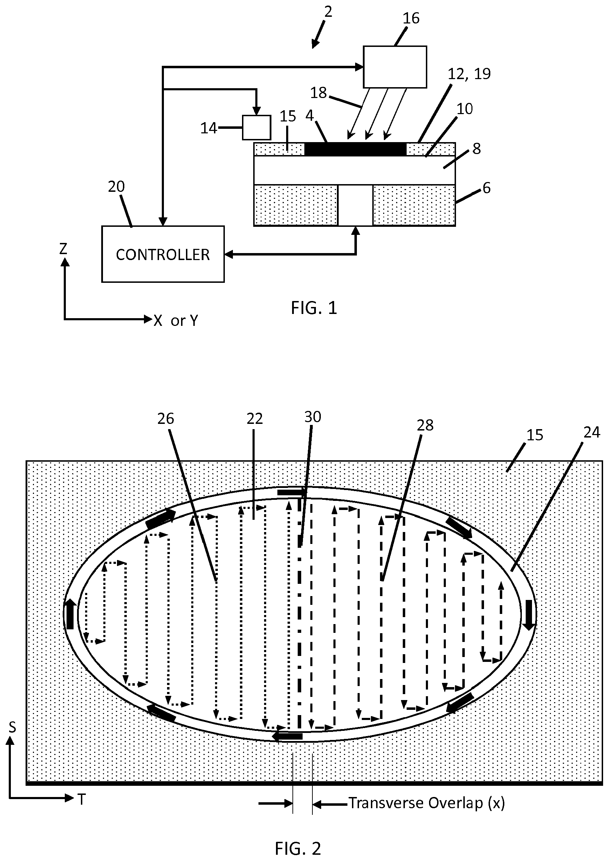

FIG. 1 is a schematic diagram of a three-dimensional printing system 2 for fabricating a three-dimensional article 4. In describing system 2, mutually orthogonal axes X, Y, and Z can be used. Axes X and Y are lateral axes and generally horizontal. Additionally, mutually orthogonal lateral axes S and T can be used. Axis S is used to describe a variable direction along a boundary such as a seam. The axis T is transverse to S. Axis Z is a vertical axis that is generally aligned with a gravitational reference. By "generally" we mean that a measure such as a quantity, a dimensional comparison, or an orientation comparison is by design and within manufacturing tolerances but as such may not be exact.

System 2 includes a build module 6 having a motorized platform 8. The motorized platform 8 has a support surface 10 upon which the three-dimensional article 4 is formed. The motorized platform 8 is configured to vertically position an upper surface 12 (either an upper surface of article 4 or surface 10) at an optimal height to allow a powder dispenser 14 to dispense a layer of powder 15 onto the upper surface 12. In an illustrative embodiment, the motorized platform 8 will be lowered before or after a layer of powder 15 is dispensed.

In an illustrative embodiment, the dispenser 14 dispenses layers of metal powder upon the motorized support 8. The layers can be any practical thickness but a typical layer thickness is less than about 200 micrometres or less than about 150 microns. More particularly, a layer thickness can be in a range of 10 to 100 micrometres. Yet more particularly, a layer thickness can be in a range of 20 to 50 micrometres. The metal powder can be a pure metal such as titanium or an alloy. Alloys can be based upon aluminum, nickel, titanium, cobalt, iron, copper, and other metals. Some metal powders can be powder mixtures of more than one pure metal, more than one alloy, or mixtures of alloys and pure metals. Yet other powders can include other materials such as ceramics.

A fusing apparatus 16 is configured to form and scan a plurality of energy beams 18 over the upper surface 12 of dispensed powder 15 to selectively fuse the powder 15. An energy beam 18 can be a high powered optical beam, a particle beam, or an electron beam. For a fusion of metal powder, a laser that outputs a beam having a power level of more than 100 watts is typical. Some lasers can output 500 watts, 1000 watts, or more than a kilowatt. The fusing apparatus 16 can include a laser, forming optics and scanning optics for forming and scanning the laser beam 18 over the surface 12.

In an embodiment, the plurality of energy beams 18 includes at least a first beam and a second beam. The plurality of energy beams can additionally include a third beam, or any number of beams. The plurality of energy beams 18 can individually be controlled and scanned independently and concurrently. The fusing apparatus 16 is configured to scan the energy beams over a laterally extending "build plane" 19 which is generally proximate to the upper surface 12 of the dispensed powder 15. The build plane 19 defines a lateral extent over which the plurality of energy beams 18 can address or operate upon. In a preferred embodiment, at least one of the energy beams 18 can address the entire build plane 19. In some embodiments, more than one energy beam 18 can individually address the entire build plane 19.

The plurality of energy beams have a lateral alignment uncertainty. This can be defined for two beams. When attempting to address the same position on the build plane with the two beams (defined by their centroids), there is a lateral alignment uncertainty of one beam with respect to the other. This uncertainty can vary due to variability of motion of the scanning mechanism along with other mechanical tolerances. The alignment uncertainty can be quantified with a standard deviation. The lateral alignment error can be defined as equal to two or more standard deviations. In one implementation, the alignment uncertainty can be defined as equal to three standard deviations. In a more conservative implementation, the alignment error can be defined as equal to four standard deviations.

The motorized platform 8, the powder dispenser 14, and the fusing apparatus 16 are all under control of a controller 20. The controller 20 includes a processor coupled to a computer-readable storage apparatus. The computer-readable storage apparatus includes a non-transitory or non-volatile storage medium that stores software instructions. When executed by the processor, the software instructions control various portions of system 2 including the motorized platform 8, the powder dispenser 14, and the fusing apparatus 16. The software instructions can also referred to as computer-readable code portions.

The controller 20 can be an integrated module or it can include a plurality of computers that are electrically or wirelessly coupled to one another. In a particular embodiment, the controller 20 includes a local controller that is physically integrated with other portions of system 2, a host computer, and a remote server. When the controller 20 is distributed among multiple computers, there can therefore be distributed processors and information storage devices that are accessed and utilized during the operation of the controller 20.

The controller 20 is generally configured to perform the following operations: (1) position the motorized support with an upper surface 12 proximate to the build plane 19, (2) operate dispenser 14 to dispense a layer of powder, (3) operate the plurality of lasers 18 to selectively fuse portions of the dispensed layer of powder, and (4) repeat (1)-(3) to complete fabrication of the three-dimensional article 4.

FIG. 2 illustrates an embodiment of a single layer of powder 15 that has been selectively fused. The selectively fused region includes a composite hatch pattern 22 surrounded by a contour 24. The composite hatch pattern 22 includes a first hatch pattern 26 and a second hatch pattern 28 joined by a seam 30. The first 26 and second 28 hatch patterns are individually formed by first and second lasers 18 respectively. The first 26 and second 28 hatch patterns are essentially contiguous at the seam 30. The hatch patterns 26 and 28 may overlap based upon an alignment uncertainty of the first and second lasers in a direction transverse to the seam 30. In the illustration, the seam 30 extends along axis S and a transverse axis T is perpendicular to the seam 30. For some geometries, the seam 30 may be nonlinear. Then, the direction S is defined as being tangential to the seam 30 and T is perpendicular to S.

In a typical embodiment, the first and second lasers have an alignment uncertainty with respect to each other along the transverse axis T. The first 26 and second 28 hatch patterns overlap along the transverse axis T with a transverse overlap distance (x). The transverse overlap distance (x) is at least equal to the alignment uncertainty. Preferably the transverse overlap distance (x) is at least two times the alignment uncertainty, three times the alignment uncertainty, or up to four times the alignment uncertainty.

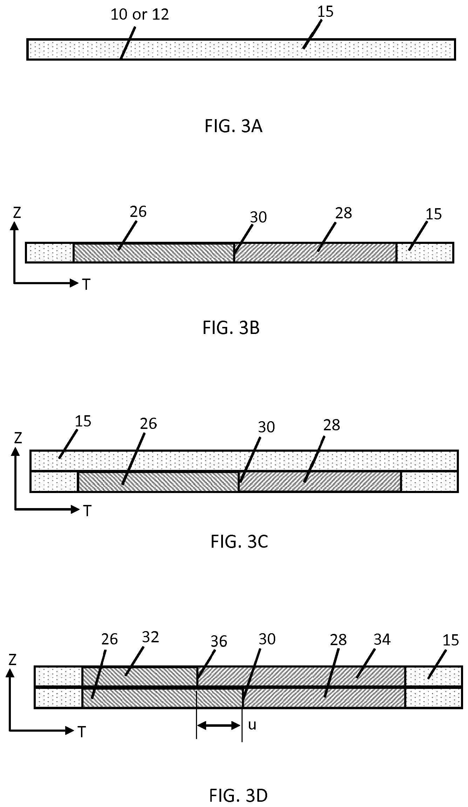

FIGS. 3A-D are illustrations depicting a deposition and fusion sequence of powder layers having a seam 30 having a transverse location that varies from layer to layer. The motorized platform 8, powder dispenser 14, and fusing apparatus 16 are operated by controller 20 to perform these steps.

According to FIG. 3A, dispenser 14 deposits a first layer of powder 15 on a surface 10 (or 12). According to FIG. 3B, first 26 and second 28 hatch patterns are fused by first and second energy beams 18 respectively. It is to be understood that the first 26 and second 28 hatch patterns overlap along the first seam 30 with a transverse overlap distance (x). The transverse overlap distance (x) along T is shown as a vertical line at seam 30 in FIG. 3B.

According to FIG. 3C, dispenser 14 dispenses a second layer of powder 15 over the first selectively fused layer. According to FIG. 3D, third 32 and fourth 34 hatch patterns are fused by the first and second energy beams 18 respectively. The third 32 and fourth 34 hatch patterns overlap along second seam 36 with a transverse overlap distance (x). Seams 30 and 36 are offset from each other by a minimum distance u.

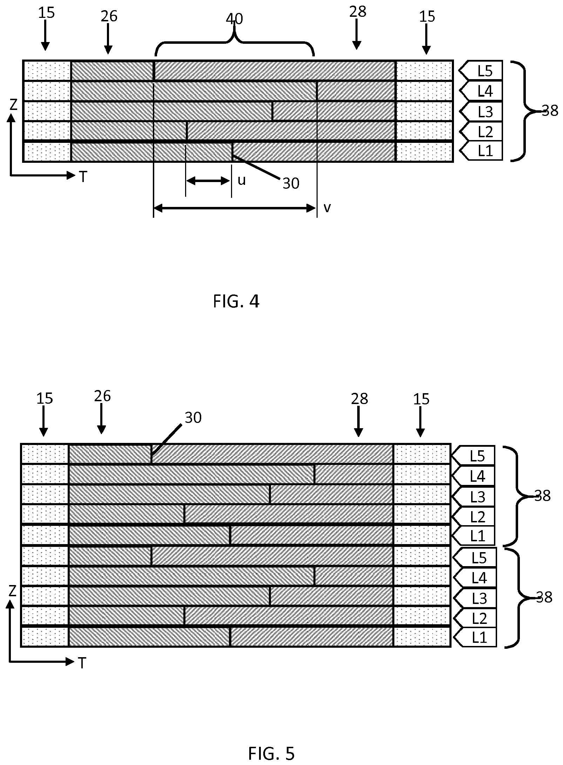

Powder dispensing and fusing can continue in a manner similar to the illustrate of FIGS. 3A-D until there is a sequence 38 of selectively fused layers as illustrated in FIG. 4. This is a sequence of five layers. The variable r will be defined as a number of layers in a sequence. For FIG. 4, r = 5. The layers are designated L1-L5 in order of formation.

The seam 30 varies in lateral location from layer to layer along the transverse axis T. There is a minimum transverse lateral distance u between any two seams 30 within sequence 38. The seams 30 define a "seam zone" 40 having a width v which is the maximum transverse lateral distance between any two seams 30.

The width v is at least two times u. In various embodiments, v is at least 3 times, at least four times, at least five times, or more than five times u.

FIG. 5 depicts the sequence 38 for r = 5 repeated twice. The sequence 30 can be repeated any number of times. More generally, sequences can have r values of three or more. Sequences for r = 4, r = 5, r > 5, r > 10 are possible. Also, the sequences 38 do not have to be exactly the same. For example, there could be a sequence with r = 5 above a sequence for which r = 10. In some embodiments, the seam locations along axis T can randomly vary from layer to layer with a limitation that any two layers in sequence have seams that are at least offset by some minimum transverse lateral distance u.

According to the claimed invention, an orientation of the seam is rotated about the vertical axis Z from one sequence 38 to the next. This rotation can, in some embodiments, increase a strength of the article 4.

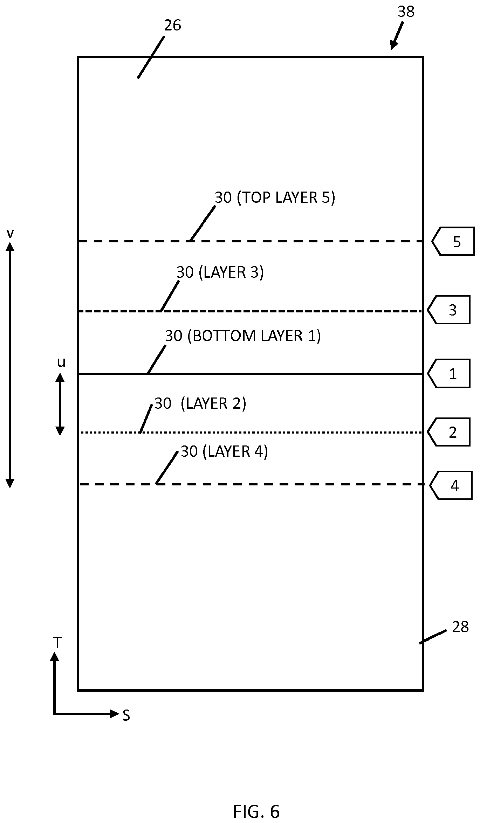

FIG. 6 is a diagram illustrating lateral overlay view of a sequence 38 of five fused layers (r = 5). The upper portion of the diagram represents hatch area 26 formed by the first energy beam 18. The lower portion of the diagram represents hatch area 28 formed by the second energy beam 18. Hatch areas are separated by seams 30 that are labeled at the right of the diagram for layers 1 to 5. Thus, FIG. 6 is a lateral diagram for FIG. 4.

In typical embodiments, the hatch areas 26 and 28 overlap across the seams 30. The overlap is related to a transverse alignment uncertainty along the axis T of the first beam 18 with respect to the second beam 18. In one embodiment, the overlap along T at least equals the alignment uncertainty. The alignment uncertainty can be defined by three standard deviations of transverse alignment between the two beams.

The value of u is at least equal to two times the transverse overlap distance (x). In some embodiments, the value of u can be three times x or more than three times x.

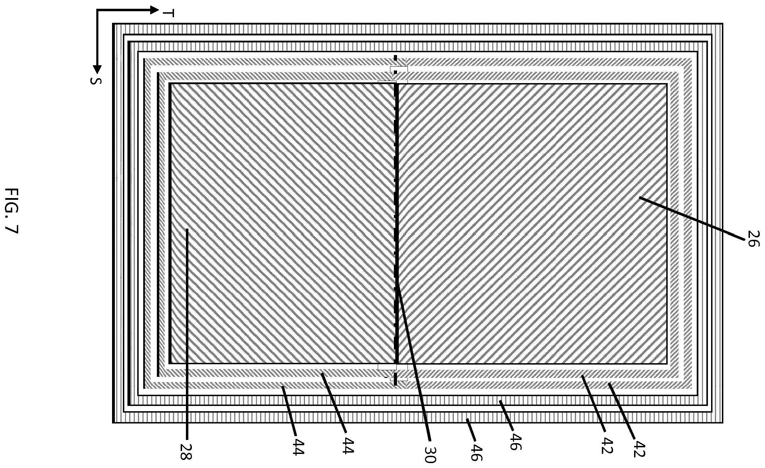

FIG. 7 is a diagram of a selectively fused layer of powder. In this example, the concept of the seam 30 extends to contours. In the illustrated embodiment, a first energy beam 18 defines an upper hatch area 26 and upper and inner contours 42. A second energy beam defines a lower hatch area 28 and lower and inner contours 44. The inner contours 42 and 44 overlap along the seam 30. In some embodiments, the seam 30 may be discontinuous - that is, there may be a transverse offset between seams for the inner contours 42 and 44 and the hatch areas 26 and 28.

Surrounding the inner contours 42 and 44 are outer contours 46. Outer contours 46 are formed by a third energy beam 18. The number of inner and outer contours can be selected in part based upon an alignment uncertainty between the first and second energy beams.

## Claims

1. A system for fabricating a three-dimensional article (4) comprising:
a powder dispenser (14) for sequentially dispensing individual layers of powder (15);
a fusing apparatus (16) for generating and scanning a plurality of energy beams including a first beam and a second beam to selectively melt the layers of powder (15); and
a controller (20) configured to:
operate the powder dispenser (14) and the fusing apparatus (16) to form a sequence of r selectively fused layers of powder in which r is at least 3, the layers individually including a composite hatch area, the composite hatch area includes a first hatch area (26) defined by the first energy beam and a second hatch area (28) defined by the second energy beam, the first and second hatch areas overlap along a seam (30) with a transverse overlap distance (x), a lateral location of the seam (30) varying by layer, for the sequence of r layers the seam (30) varies in lateral location over a zone having a lateral width of v and in which no two layers in the sequence (38) have a transverse distance between seams (30) of less than u in which u is at least equal to two times the transverse overlap distance (x), wherein the controller is further configured to repeat the sequence (38),
**characterized in that** an orientation of the seam (30) is rotated about a vertical axis Z perpendicular to the traverse axis from one sequence (38) to the next.

2. The system according to claim 1 wherein the plurality of beams include a third beam (18), the controller (20) is configured to operate the third beam (18) to define at least part of a contour around the composite hatch area.

3. The system according to claim 2 wherein the plurality of beams define a plurality of contours around the composite hatch area including an outer contour (46) and an inner contour (42, 44), the outer contour (46) is formed by the third beam (18) and the inner contour (42, 44) is formed by a combination of the first beam and the second beam.

4. The system according to any of claims 1 to 3 wherein the transverse overlap distance (x) is based upon an alignment uncertainty of the first beam with respect to the second beam along a transverse axis that is transverse to the seam (30), and wherein the transverse overlap distance (x) is preferably at least equal to the alignment uncertainty.

5. The system according to any one of claims 1 to 4 wherein r is at least 5.

6. The system according to any one of claims 1 to 5 wherein the powder dispenser (14) contains metal powder.

7. A method for fabricating a three-dimensional article (4) comprising the steps:
A) operating a powder dispenser (14) to dispense a first layer of powder;
B) concurrently operating a plurality of energy beams including a first beam and a second beam to selectively fuse the layer of powder including:
B1) operating the first beam to fuse a first hatch area (26); and
B2) operating the second beam to fuse a second hatch area (28), the first and second hatch areas overlap along a first seam (30) with a transverse overlap distance (x);
C) operating the powder dispenser (14) to dispense a second layer of powder over the first layer of powder;
D) concurrently operating the plurality of energy beams to selectively fuse the second layer of powder including:
D1) operating the first beam to fuse a third hatch area (32); and
D2) operating the second beam to fuse a fourth hatch area (34), the third and fourth hatch areas overlap along a second seam (36), the second seam (36) having an average transverse offset from the first seam by at least a value of u;
E) operating the powder dispenser (14) to dispense a third layer of powder over the second layer of powder;
F) concurrently operating the plurality of energy beams to selectively fuse the third layer of powdering including:
F1) operating the first beam to fuse a fifth hatch area; and operating the second beam to fuse a sixth hatch area, the fifth and sixth hatch areas overlap along a third seam, the third seam having an average transverse offset from the first seam and the second seam by at least a value of u, u is at least equal to two times the transverse overlap distance (x), wherein the method further comprises repeating the steps A) - F1). **characterized in that** an orientation of the seam (30) is rotated about a vertical axis perpendicular to the traverse axis.

8. The method according to claim 7 further comprising operating a third beam to fuse a contour around the first and second hatch areas.

9. The method according to claim 8 further comprising operating the first and second beams to define at least one inner contour (42, 44) around the first and second hatch areas and operating the third beam to define an outer contour (46) around the inner contour (42, 44).

10. The method according to any of claims 7 to 9 wherein the transverse overlap distance (x) is based upon an alignment uncertainty of the first beam with respect to the second beam along a transverse axis that is transverse to the seam (30), and wherein the transverse overlap distance (x) is preferably at least equal to the alignment uncertainty.

11. A computer-readable storage apparatus for fabricating a three-dimensional article (4), the computer-readable storage apparatus including a non-transitory storage medium storing software instructions, in response to execution by a processor the software instructions cause the system according to any of claims 1 - 6 to:
A) operate a powder dispenser (14) to dispense a first layer of powder;
B) operate a plurality of energy beams including a first beam and a second beam to selectively fuse the layer of powder including:
B1) operate the first beam to fuse a first hatch area (26); and
B2) operate the second beam to fuse a second hatch area (28), the first and second hatch areas overlap along a first seam (30) with a transverse overlap distance (x);
C) operate the powder dispenser (14) to dispense a second layer of powder over the first layer of powder;
D) concurrently operate the plurality of energy beams to selectively fuse the second layer of powder including:
D1) operate the first beam to fuse a third hatch area (32); and
D2) operate the second beam to fuse a fourth hatch area (34), the third and fourth hatch areas overlap along a second seam (36), the second seam (36) having an average transverse offset from the first seam (30) by at least a value of u;
E) operate the powder dispenser to dispense a third layer of powder over the second layer of powder;
F) concurrently operate the plurality of energy beams to selectively fuse the third layer of powdering including:
F1) operate the first beam to fuse a fifth hatch area; and operate the second beam to fuse a sixth hatch area, the fifth and sixth hatch areas overlap along a third seam, the third seam having an average transverse offset from the first seam and the second seam by at least a value of u, u is at least equal to two times the transverse overlap distance (x), **characterized in that** the system is further caused to repeating the steps A) - F1), wherein an orientation of the seam (30) is rotated about a vertical axis Z perpendicular to the traverse axis.

12. The computer-readable storage apparatus according to claim 11 wherein response to execution by a processor the software instructions cause the system according to any of claims 1 - 6 to operate a third beam to fuse a contour around the first and second hatch areas.

13. The computer-readable storage apparatus according to claim 12 wherein response to execution by a processor the software instructions cause the system according to any of claims 1 - 6 to operate the first and second beams to define at least one inner contour (42, 44) around the first and second hatch areas and operate the third beam to define an outer contour (46) around the inner contour (42, 44).

14. The computer-readable storage apparatus according to any of claims 11 to 13 wherein the transverse overlap distance (x) is based upon an alignment uncertainty of the first beam with respect to the second beam along a transverse axis that is transverse to the seam (30), and wherein the transverse overlap distance (x) is preferably at least equal to the alignment uncertainty.

## Patentansprüche

1. System zur Fertigung eines dreidimensionalen Gegenstands (4), umfassend:
einen Pulverspender (14) zum sukzessiven Abgeben einzelner Pulverschichten (15);
eine Schmelzvorrichtung (16) zum Erzeugen und gezielten Bewegen einer Vielzahl von Energiestrahlen einschließlich eines ersten Strahls und eines zweiten Strahls zum selektiven Schmelzen der Pulverschichten (15); und
ein Steuergerät (20), das so konfiguriert ist, dass es:
den Pulverspender (14) und die Schmelzvorrichtung (16) so betreibt, dass eine Abfolge von r selektiv angeschmolzenen Pulverschichten entsteht, wobei r wenigstens 3 beträgt, wobei die Schichten einzeln einen zusammengesetzten Schraffurbereich umfassen, der zusammengesetzte Schraffurbereich einen ersten Schraffurbereich (26), der durch den ersten Energiestrahl definiert wird, und einen zweiten Schraffurbereich (28), der durch den zweiten Energiestrahl definiert wird, umfasst, der erste und der zweite Schraffurbereich entlang einer Naht (30) mit einem Querüberlappungsabstand (x) überlappen, wobei die seitliche Position der Naht (30) je nach Schicht variiert, über die Abfolge von r Schichten die Naht (30) über eine Zone mit einer seitlichen Breite v in ihrer seitlichen Position variiert und wobei keine zwei Schichten in der Abfolge (38) einen Querabstand zwischen Nähten (30) von weniger als u aufweisen, wobei u wenigstens gleich dem Zweifachen des Querüberlappungsabstands (x) ist, wobei das Steuergerät weiterhin so konfiguriert ist, dass es die Abfolge (38) wiederholt,
**dadurch gekennzeichnet, dass** die Orientierung der Naht (30) von einer Abfolge (38) zur nächsten um eine vertikale Achse Z, die senkrecht zu der Querachse steht, herum gedreht wird.

2. System gemäß Anspruch 1, wobei die Vielzahl von Strahlen einen dritten Strahl (18) umfasst, das Steuergerät (20) so konfiguriert ist, dass es den dritten Strahl (18) so betreibt, dass er wenigstens einen Teil einer Kontur um den zusammengesetzten Schraffurbereich herum definiert.

3. System gemäß Anspruch 2, wobei die Vielzahl von Strahlen eine Vielzahl von Konturen um den zusammengesetzten Schraffurbereich herum einschließlich einer äußeren Kontur (46) und einer inneren Kontur (42, 44) definiert, die äußere Kontur (46) durch den dritten Strahl (18) gebildet wird und die innere Kontur (42, 44) durch eine Kombination aus dem ersten Strahl und dem zweiten Strahl gebildet wird.

4. System gemäß einem der Ansprüche 1 bis 3, wobei der Querüberlappungsabstand (x) auf einer Ausrichtungsunschärfe des ersten Strahls in Bezug auf den zweiten Strahl entlang einer Querachse, die quer zu der Naht (30) verläuft, beruht und wobei der Querüberlappungsabstand (x) vorzugsweise wenigstens gleich der Ausrichtungsunschärfe ist.

5. System gemäß einem der Ansprüche 1 bis 4, wobei r wenigstens 5 beträgt.

6. System gemäß einem der Ansprüche 1 bis 5, wobei der Pulverspender (14) Metallpulver enthält.

7. Verfahren zur Fertigung eines dreidimensionalen Gegenstands (4), umfassend die Schritte:
A) Betreiben eines Pulverspenders (14) in einer solchen Weise, dass er eine erste Pulverschicht ausgibt;
B) gleichzeitiges Betreiben einer Vielzahl von Energiestrahlen einschließlich eines ersten Strahls und eines zweiten Strahls zum selektiven Schmelzen der Pulverschicht, umfassend:
B1) Betreiben des ersten Strahls in einer solchen Weise, dass er einen ersten Schraffurbereich (26) aufschmilzt; und
B2) Betreiben des zweiten Strahls in einer solchen Weise, dass er einen zweiten Schraffurbereich (28) aufschmilzt, wobei der erste und der zweite Schraffurbereich entlang einer ersten Naht (30) mit einem Querüberlappungsabstand (x) überlappen;
C) Betreiben des Pulverspenders (14) in einer solchen Weise, dass er eine zweite Pulverschicht über die erste Pulverschicht ausgibt;
D) gleichzeitiges Betreiben der Vielzahl von Energiestrahlen zum selektiven Schmelzen der zweiten Pulverschicht, umfassend:
D1) Betreiben des ersten Strahls in einer solchen Weise, dass er einen dritten Schraffurbereich (32) aufschmilzt; und
D2) Betreiben des zweiten Strahls in einer solchen Weise, dass er einen vierten Schraffurbereich (34) aufschmilzt, wobei der dritte und der vierte Schraffurbereich entlang einer zweiten Naht (36) überlappen, wobei die zweite Naht (36) einen mittleren Querversatz gegenüber der ersten Naht um wenigstens einen Wert u aufweist;
E) Betreiben des Pulverspenders (14) in einer solchen Weise, dass er eine dritte Pulverschicht über die zweite Pulverschicht ausgibt;
F) gleichzeitiges Betreiben der Vielzahl von Energiestrahlen zum selektiven Schmelzen der dritten Pulverschicht, umfassend:
F1) Betreiben des ersten Strahls in einer solchen Weise, dass er einen fünften Schraffurbereich aufschmilzt; und
Betreiben des zweiten Strahls in einer solchen Weise, dass er einen sechsten Schraffurbereich aufschmilzt, der fünfte und der sechste Schraffurbereich entlang einer dritten Naht überlappen, wobei die dritte Naht einen mittleren Querversatz gegenüber der ersten Naht und der zweiten Naht um wenigstens einen Wert u aufweist, wobei u wenigstens gleich dem Zweifachen des Querüberlappungsabstands (x) ist, wobei das Verfahren weiterhin das Wiederholen der Schritte A) bis F1) umfasst,
**dadurch gekennzeichnet, dass** die Orientierung der Naht (30) um eine vertikale Achse Z, die senkrecht zu der Querachse steht, herum gedreht wird.

8. Verfahren gemäß Anspruch 7, weiterhin umfassend das Betreiben eines dritten Strahls zum Aufschmelzen einer Kontur um den ersten und den zweiten Schraffurbereich herum.

9. Verfahren gemäß Anspruch 8, weiterhin umfassend das Betreiben des ersten und des zweiten Strahls in einer solchen Weise, dass sie wenigstens eine innere Kontur (42, 44) um den ersten und den zweiten Schraffurbereich herum definieren, und das Betreiben des dritten Strahls in einer solchen Weise, dass er eine äußere Kontur (46) um die innere Kontur (42, 44) herum definiert.

10. Verfahren gemäß einem der Ansprüche 7 bis 9, wobei der Querüberlappungsabstand (x) auf einer Ausrichtungsunschärfe des ersten Strahls in Bezug auf den zweiten Strahl entlang einer Querachse, die quer zu der Naht (30) verläuft, beruht und wobei der Querüberlappungsabstand (x) vorzugsweise wenigstens gleich der Ausrichtungsunschärfe ist.

11. Computerlesbare Speichervorrichtung zur Fertigung eines dreidimensionalen Gegenstands (4), wobei die computerlesbare Speichervorrichtung ein Permanentspeichermedium umfasst, das Software-Anweisungen speichert, wobei die Software-Anweisungen als Reaktion auf die Ausführung durch einen Prozessor bewirken, dass das System gemäß den Ansprüchen 1 bis 6:
A) einen Pulverspender (14) in einer solchen Weise betreibt, dass er eine erste Pulverschicht ausgibt;
B) eine Vielzahl von Energiestrahlen einschließlich eines ersten Strahls und eines zweiten Strahls zum selektiven Schmelzen der Pulverschicht betreibt, umfassend:
B1) Betreiben des ersten Strahls in einer solchen Weise, dass er einen ersten Schraffurbereich (26) aufschmilzt; und
B2) Betreiben des zweiten Strahls in einer solchen Weise, dass er einen zweiten Schraffurbereich (28) aufschmilzt, wobei der erste und der zweite Schraffurbereich entlang einer ersten Naht (30) mit einem Querüberlappungsabstand (x) überlappen;
C) Betreiben des Pulverspenders (14) in einer solchen Weise, dass er eine zweite Pulverschicht über die erste Pulverschicht ausgibt;
D) gleichzeitiges Betreiben der Vielzahl von Energiestrahlen zum selektiven Schmelzen der zweiten Pulverschicht, umfassend:
D1) Betreiben des ersten Strahls in einer solchen Weise, dass er einen dritten Schraffurbereich (32) aufschmilzt; und
D2) Betreiben des zweiten Strahls in einer solchen Weise, dass er einen vierten Schraffurbereich (34) aufschmilzt, wobei der dritte und der vierte Schraffurbereich entlang einer zweiten Naht (36) überlappen, wobei die zweite Naht (36) einen mittleren Querversatz gegenüber der ersten Naht (30) um wenigstens einen Wert u aufweist;
E) Betreiben des Pulverspenders in einer solchen Weise, dass er eine dritte Pulverschicht über die zweite Pulverschicht ausgibt;
F) gleichzeitiges Betreiben der Vielzahl von Energiestrahlen zum selektiven Schmelzen der dritten Pulverschicht, umfassend:
F1) Betreiben des ersten Strahls in einer solchen Weise, dass er einen fünften Schraffurbereich aufschmilzt; und
Betreiben des zweiten Strahls in einer solchen Weise, dass er einen sechsten Schraffurbereich aufschmilzt, der fünfte und der sechste Schraffurbereich entlang einer dritten Naht überlappen, wobei die dritte Naht einen mittleren Querversatz gegenüber der ersten Naht und der zweiten Naht um wenigstens einen Wert u aufweist, wobei u wenigstens gleich dem Zweifachen des Querüberlappungsabstands (x) ist, **dadurch gekennzeichnet, dass** weiterhin bewirkt wird, dass das System die Schritte A) bis F1) wiederholt,
wobei die Orientierung der Naht (30) um eine vertikale Achse Z, die senkrecht zu der Querachse steht, herum gedreht wird.

12. Computerlesbare Speichervorrichtung gemäß Anspruch 11, wobei die Software-Anweisungen als Reaktion auf die Ausführung durch einen Prozessor bewirken, dass das System gemäß einem der Ansprüche 1 bis 6 einen dritten Strahl zum Aufschmelzen einer Kontur um den ersten und den zweiten Schraffurbereich herum betreibt.

13. Computerlesbare Speichervorrichtung gemäß Anspruch 12, wobei die Software-Anweisungen als Reaktion auf die Ausführung durch einen Prozessor bewirken, dass das System gemäß einem der Ansprüche 1 bis 6 den ersten und den zweiten Strahl in einer solchen Weise betreibt, dass sie wenigstens eine innere Kontur (42, 44) um den ersten und den zweiten Schraffurbereich herum definieren, und den dritten Strahl in einer solchen Weise betreibt, dass er eine äußere Kontur (46) um die innere Kontur (42, 44) herum definiert.

14. Computerlesbare Speichervorrichtung gemäß einem der Ansprüche 11 bis 13, wobei der Querüberlappungsabstand (x) auf einer Ausrichtungsunschärfe des ersten Strahls in Bezug auf den zweiten Strahl entlang einer Querachse, die quer zu der Naht (30) verläuft, beruht und wobei der Querüberlappungsabstand (x) vorzugsweise wenigstens gleich der Ausrichtungsunschärfe ist.

## Revendications

1. Système pour fabriquer un article tridimensionnel (4), comprenant :
un distributeur de poudre (14) pour distribuer successivement des couches individuelles de poudre (15),
un dispositif de fusion (16) pour générer et faire balayer une pluralité de faisceaux d'énergie incluant un premier faisceau et un deuxième faisceau pour fondre sélectivement des couches de poudre (15), et
une unité de commande (20) configurée pour
opérer ledit distributeur de poudre (14) et ledit dispositif de fusion (16) pour former une séquence de r couches de poudre sélectivement fondues où r est au moins 3, les couches individuellement incluant une zone de hachure composée, ladite zone de hachure composée comprend une première zone de hachure (26) définie par le premier faisceau d'énergie, et une deuxième zone de hachure (28) définie par le deuxième faisceau d'énergie, lesdites première et deuxième zones de hachure se chevauchent le long d'une couture (30) avec une distance de chevauchement transversale (x), la position latérale de la couture (30) variant selon les couches, pour la séquence de r couches, la couture (30) varie selon la position latérale sur une zone ayant une épaisseur latérale de v, et dans lequel il n'y a pas deux couches dans la séquence (38) qui ont une distance transversale entre des coutures (30) de moins de u, dans lequel u est au moins égal à deux fois la distance de chevauchement transversale (x), dans lequel ladite unité de commande est en outre configurée pour répéter la séquence (38),
**caractérisé en ce que** l'orientation de la couture (30) est tournée autour d'un axe vertical Z perpendiculaire à l'axe transversal d'une séquence (38) à la prochaine.

2. Système selon la revendication 1, dans lequel la pluralité de faisceaux comprend un troisième faisceau (18), ladite unité de commande (20) est configurée pour opérer le troisième faisceau (18) pour définir au moins une partie d'un contour autour de la zone de hachure composée.

3. Système selon la revendication 2, dans lequel la pluralité de faisceaux définissent une la pluralité de contours autour de la zone de hachure composée incluant un contour extérieur (46) et un contour intérieur (42, 44), ledit contour extérieur (46) est formé par le troisième faisceau (18), et ledit contour intérieur (42, 44) est formé par une combinaison du premier faisceau et du deuxième faisceau.

4. Système selon l'une quelconque des revendications 1 à 3, dans lequel la distance de chevauchement transversale (x) est basée sur une incertitude d'alignement du premier faisceau par rapport au deuxième faisceau le long d'un axe transversal qui est transversal à la couture (30), et dans lequel la distance de chevauchement transversale (x) est de préférence au moins égale à l'incertitude d'alignement.

5. Système selon l'une quelconque des revendications 1 à 4, dans lequel r est au moins 5.

6. Système selon l'une quelconque des revendications 1 à 5, dans lequel ledit distributeur de poudre (14) contient une poudre métallique.

7. Procédé pour fabriquer un article tridimensionnel (4), comprenant les étapes consistant à
A) opérer un distributeur de poudre (14) pour distribuer une première couche de poudre,
B) opérer simultanément une pluralité de faisceaux d'énergie comprenant un premier faisceau et un deuxième faisceau pour fondre sélectivement la couche de poudre
B1) en opérant le premier faisceau pour fondre une première zone de hachure (26), et
B2) en opérant le deuxième faisceau pour fondre une deuxième zone de hachure (28), lesdites première et deuxième zones de hachure se chevauchent le long d'une première couture (30) avec une distance de chevauchement transversale (x),
C) opérer ledit distributeur de poudre (14) pour distribuer une deuxième couche de poudre sur la première couche de poudre,
D) opérer simultanément la pluralité de faisceaux d'énergie pour fondre sélectivement la deuxième couche de poudre
D1) en opérant le premier faisceau pour fondre une troisième zone de hachure (32), et
D2) en opérant le deuxième faisceau pour fondre une quatrième zone de hachure (34), lesdites troisième et quatrième zones de hachure se chevauchent le long d'une deuxième couture (36), ladite deuxième couture (36) ayant un décalage transversal moyen par rapport à la première couture d'au moins une valeur de u,
E) opérer ledit distributeur de poudre (14) pour distribuer une troisième couche de poudre sur la deuxième couche de poudre,
F) opérer simultanément la pluralité de faisceaux d'énergie pour fondre sélectivement la troisième couche de poudre
F1) en opérant le premier faisceau pour fondre une cinquième zone de hachure, et
en opérant le deuxième faisceau pour fondre une sixième zone de hachure, lesdites cinquième et sixième zones de hachure se chevauchent le long d'une troisième couture, ladite troisième couture ayant un décalage transversal moyen par rapport à la première couture et à la deuxième couture d'au moins une valeur de u, u est au moins égal à deux fois la distance de chevauchement transversale (x), dans lequel le procédé comprend en outre la répétition des étapes a) à F1),
**caractérisé en ce que** l'orientation de la couture (30) est tournée autour d'un axe vertical Z perpendiculaire à l'axe transversal.

8. Procédé selon la revendication 7, comprenant en outre l'étape consistant à opérer un troisième faisceau pour fondre un contour autour des première et deuxième zones de hachure.

9. Procédé selon la revendication 8, comprenant en outre les étapes consistant à opérer le premier et deuxième faisceaux pour définir au moins un contour intérieur (42, 44) autour des première et deuxième zones de hachure, et opérer le troisième faisceau pour définir un contour extérieur (46) autour du contour intérieur (42, 44).

10. Procédé selon l'une quelconque des revendications 7 à 9, dans lequel la distance de chevauchement transversale (x) est basée sur une incertitude d'alignement du premier faisceau par rapport au deuxième faisceau le long d'un axe transversal qui est transversal à la couture (30), et dans lequel la distance de chevauchement transversale (x) est de préférence au moins égale à l'incertitude d'alignement.

11. Dispositif de stockage lisible par ordinateur pour fabriquer un article tridimensionnel (4), ledit dispositif de stockage lisible par ordinateur comprenant un support de stockage permanent stockant des instructions de logiciel, en réponse à l'exécution par un processeur, les instructions de logiciel provoquent le système selon l'une quelconque des revendications 1 à 6 à
A) opérer un distributeur de poudre (14) pour distribuer une première couche de poudre,
B) opérer une pluralité de faisceaux d'énergie incluant un premier faisceau et un deuxième faisceau pour fondre sélectivement la couche de poudre
B1) en opérant le premier faisceau pour fondre une première zone de hachure (26), et
B2) en opérant le deuxième faisceau pour fondre une deuxième zone de hachure (28), lesdites première et deuxième zones de hachure se chevauchent le long d'une première couture (30) avec une distance de chevauchement transversale (x),
C) opérer le distributeur de poudre (14) pour distribuer une deuxième couche de poudre sur la première couche de poudre,
D) opérer simultanément la pluralité de faisceaux d'énergie pour fondre sélectivement la deuxième couche de poudre
D1) en opérant le premier faisceau pour fondre une troisième zone de hachure (32), et
D2) en opérant le deuxième faisceau pour fondre une quatrième zone de hachure (34), lesdites troisième et quatrième zones de hachure se chevauchent le long d'une deuxième couture (36), ladite deuxième couture (36) ayant un décalage transversal moyen par rapport à la première couture (30) d'au moins une valeur de u,
E) opérer le distributeur de poudre pour distribuer une troisième couche de poudre sur la deuxième couche de poudre,
F) opérer simultanément la pluralité de faisceaux d'énergie pour fondre sélectivement la troisième couche de poudre
F1) en opérant le premier faisceau pour fondre une cinquième zone de hachure, et
en opérant le deuxième faisceau pour fondre une sixième zone de hachure, lesdites cinquième et sixième zones de hachure se chevauchent le long d'une troisième couture, ladite troisième couture ayant un décalage transversal moyen par rapport à la première couture et à la deuxième couture d'au moins une valeur de u, u est au moins égal à deux fois la distance de chevauchement transversale (x), **caractérisé en ce que** le système est provoqué en outre à répéter les étapes a) à F1),
dans lequel l'orientation de la couture (30) est tournée autour d'un axe vertical Z perpendiculaire à l'axe transversal.

12. Dispositif de stockage lisible par ordinateur selon la revendication 11, dans lequel en réponse à l'exécution par un processeur, les instructions de logiciel provoquent le système selon l'une quelconque des revendications 1 à 6 à opérer un troisième faisceau pour fondre un contour autour des première et deuxième zones de hachure.

13. Dispositif de stockage lisible par ordinateur selon la revendication 12, dans lequel en réponse à l'exécution par un processeur, les instructions de logiciel provoquent le système selon l'une quelconque des revendications 1 à 6 à opérer lesdits premier et deuxième faisceaux pour définir au moins un contour intérieur (42, 44) autour les première et deuxième zones de hachure, et à opérer le troisième faisceau pour définir un contour extérieur (46) autour du contour intérieur (42, 44).

14. Dispositif de stockage lisible par ordinateur selon l'une quelconque des revendications 11 à 13, dans lequel la distance de chevauchement transversale (x) est basée sur une incertitude d'alignement du premier faisceau par rapport au deuxième faisceau le long d'un axe transversal qui est transversal à la couture (30), et dans lequel la distance de chevauchement transversale (x) est de préférence au moins égale à l'incertitude d'alignement.
